(19) Europäisches Patentamt / European Patent Office / Office européen des brevets

(11) **EP 4 190 527 B1**

(12) **EUROPEAN PATENT SPECIFICATION**

(45) Date of publication and mention of the grant of the patent:
**14.05.2025 Bulletin 2025/20**

(21) Application number: **21848670.2**

(22) Date of filing: **20.07.2021**

(51) International Patent Classification (IPC):
*C08F 222/40* *(2006.01)*   *C08F 212/00* *(2006.01)*
*C08F 220/42* *(2006.01)*   *B29C 45/00* *(2006.01)*
*C08F 8/32* *(2006.01)*   *C08L 35/06* *(2006.01)*
*C08L 25/08* *(2006.01)*   *C08L 55/02* *(2006.01)*

(52) Cooperative Patent Classification (CPC):
(C-Sets available)
**C08F 212/08; B29C 45/0001; C08F 8/32;
C08F 222/40; C08L 55/02**                    (Cont.)

(86) International application number:
**PCT/JP2021/027153**

(87) International publication number:
**WO 2022/024878 (03.02.2022 Gazette 2022/05)**

(54) **MALEIMIDE-BASED COPOLYMER, MALEIMIDE-BASED COPOLYMER COMPOSITION, RESIN COMPOSITION, AND INJECTION MOLDED BODY**

COPOLYMER AUF MALEIMIDBASIS, COPOLYMERZUSAMMENSETZUNG AUF MALEIMIDBASIS, HARZZUSAMMENSETZUNG UND SPRITZGUSSKÖRPER

COPOLYMÈRE À BASE DE MALÉIMIDE, COMPOSITION DE COPOLYMÈRE À BASE DE MALÉIMIDE, COMPOSITION DE RÉSINE ET CORPS MOULÉ PAR INJECTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.07.2020 JP 2020126772**

(43) Date of publication of application:
**07.06.2023 Bulletin 2023/23**

(73) Proprietor: **Denka Company Limited**
**Tokyo 103-8338 (JP)**

(72) Inventors:
• **NAKANISHI, Soichiro**
**Tokyo 103-8338 (JP)**
• **MATSUMOTO, Masanori**
**Tokyo 103-8338 (JP)**
• **NISHINO, Kohei**
**Tokyo 103-8338 (JP)**

(74) Representative: **Gulde & Partner**
**Patent- und Rechtsanwaltskanzlei mbB**
**Berliner Freiheit 2**
**10785 Berlin (DE)**

(56) References cited:
EP-A1- 2 160 422    EP-A1- 3 998 148
EP-A1- 3 998 149    WO-A1-2009/060917
WO-A1-2021/006265    WO-A1-2021/006266
JP-A- 2004 346 149    JP-A- H05 339 479

(52) Cooperative Patent Classification (CPC): (Cont.)

C-Sets
**C08F 212/08, C08F 222/40, C08F 220/44,
C08F 222/06;
C08F 222/40, C08F 212/08, C08F 220/44,**
**C08F 222/06;
C08L 55/02, C08L 25/08;
C08L 55/02, C08L 35/06;**
C08F 8/32, C08F 212/08;
C08F 220/44, C08F 212/08, C08F 222/02,
C08F 212/32

Description

## TECHNICAL FIELD

The present invention relates to a maleimide-based copolymer, a maleimide-based copolymer composition, a resin composition, and to an injection molded body.

## BACKGROUND

Due to its superior mechanical strength, appearance, chemical resistance, moldability and the like, acrylonitrile-butadiene-styrene copolymer resin (ABS resin) is used in a wide variety of applications including automobiles, home appliances, office automation equipment, housing materials, daily necessities and the like. In applications which require heat resistance such as interior material of automobiles, ABS resin containing maleimide-based copolymer as the heat resistance providing agent is used (for example, Patent Literature 1, Patent Literature 2).

However, there is a disadvantageous aspect in ABS resin containing maleimide-based copolymer, which is the low chemical resistance. Therefore, maleimide-based copolymer having vinyl cyanide monomer copolymerized has been suggested to overcome such disadvantage (for example, Patent Literature 3, Patent Literature 4). For example, Patent Literature 5 describes a maleimide based copolymer, wherein the maleimide based copolymer includes 40 to 60 mass% of aromatic vinyl monomer unit, 5 to 20 mass% of vinyl cyanide monomer unit, 35 to 50 mass% of maleimide monomer unit, and the maleimide based copolymer has a glass transition temperature of 165°C or higher. Patent Literature 6 describes a maleimide based copolymer including 40 to 60 mass% of aromatic vinyl monomer unit, 5 to 20 mass% of vinyl cyanide monomer unit, 25 to 50 mass% of maleimide monomer unit, 0.1 to 10 mass% of dicarboxylic anhydride monomer unit; wherein the maleimide based copolymer has a glass transition temperature of 165 to 200°C. Patent Literature 7 refers to a bulk terpolymer, comprising 5-60 wt% of an N-substituted maleimide monomer, 10-70 wt% of an $\alpha$-alkylstyrene monomer and 5-50 wt% of an unsaturated nitrile monomer having a weight-average molecular weight (Mw) of 70,000-300,000 and a glass transition temperature of 140-200 °C.

## CITATION LIST

## PATENT LITERATURE

[Patent Literature 1] JP S57-98536 A
[Patent Literature 2] JP S57-125242 A
[Patent Literature 3] JP 2004-339280 A
[Patent Literature 4] JP 2007-9228 A
[Patent Literature 5] EP 3 998 148 Al
[Patent Literature 6] EP 3 998 149 Al
[Patent Literature 7] WO 2008/153243 A1

## SUMMARY OF INVENTION

## TECHNICAL PROBLEM

The currently suggested maleimide-based copolymer having vinyl cyanide monomer copolymerized has high heat resistance. However, improvement in flowability during molding has been desired. Further, the maleimide-based copolymer containing vinyl cyanide monomer tends to color yellow. Therefore, it was problematic when the molded article was used for white products.

Accordingly, the present invention provides a maleimide-based copolymer which allows to obtain a resin composition having balanced heat resistance providing property and impact resistance, superior flowability, and low yellowness (YI); a maleimide-based copolymer composition using such maleimide-based copolymer; a resin composition; and an injection molded body.

## SOLUTION TO PROBLEM

The present invention is directed to:

(1) A maleimide-based copolymer, comprising: aromatic vinyl monomer unit, vinyl cyanide monomer unit, and maleimide monomer unit; wherein:

> the maleimide-based copolymer has a weight average molecular weight of 50,000 to 110,000, which is a value of polystyrene equivalent measured by gel permeation chromatography (GPC) as described herein; and
> the maleimide-based copolymer has a mid-point glass transition temperature measured in accordance with JIS K-7121 of 165 °C to 200 °C; and
> the maleimide-based copolymer has a yellowness measured in accordance with JIS K-7373 of 0.5 to 3.5.

In an embodiment, the maleimide-based copolymer according to the present invention comprises 40 to 60 mass% of the aromatic vinyl monomer unit, 5 to 20 mass% of the vinyl cyanide monomer unit, and 30 to 50 mass% of the maleimide monomer unit as a monomer unit constituting the maleimide-based copolymer.

The present invention is also directed to a maleimide-based copolymer composition, comprising:

> 100 parts by mass of the maleimide-based copolymer according to the present invention; and
> 0 to 20 parts by mass of a copolymer other than the maleimide-based copolymer; wherein:
> the copolymer other than the maleimide-based copolymer comprises vinyl cyanide monomer unit and aromatic vinyl monomer unit.

The present invention is also directed to a resin composition, comprising:

> 5 to 40 mass% of the maleimide-based copolymer according to the present invention; and
> 60 to 95 mass% of one or two or more of a resin selected from the group consisting of: acrylonitrile-butadiene-styrene copolymer resin, acrylonitrile-styrene-acryl based rubber copolymer resin, acrylonitrile-ethylene·propylene based rubber-styrene copolymer resin, and styrene-acrylonitrile copolymer resin.

The present invention is also directed to a resin composition, comprising:

> 5 to 40 mass% of the maleimide-based copolymer composition according to the present invention; and
> 60 to 95 mass% of one or two or more of a resin selected from the group consisting of: acrylonitrile-butadiene-styrene copolymer resin, acrylonitrile-styrene-acryl based rubber copolymer resin, acrylonitrile-ethylene·propylene based rubber-styrene copolymer resin, and styrene-acrylonitrile copolymer resin.

The present invention is also directed to an injection molded body made from the resin composition according to the present invention.

In an embodiment, the injection molded body is used as an interior component or an exterior component of an automobile.

**EFFECT OF THE INVENTION**

According to the present invention, a maleimide-based copolymer which allows to obtain a resin composition having balanced heat resistance providing property and impact resistance, superior flowability, and low yellowness (YI); a maleimide-based copolymer composition using such maleimide-based copolymer; a resin composition; and an injection molded body are provided.

**EMBODIMENTS OF THE INVENTION**

<Explanation of Terms>

In the present specification, the phrase "A to B" means A or more and B or less.

Hereinafter, the embodiments of the present invention will be described in detail. The maleimide-based copolymer of the present invention is a copolymer obtained by copolymerizing aromatic vinyl monomer, vinyl cyanide monomer, and maleimide monomer.

The aromatic vinyl monomer which can be used in the maleimide-based copolymer is used for improving the color phase of the maleimide-based copolymer. For example, styrene, o-methyl styrene, m-methyl styrene, p-methyl styrene, 2,4-dimethyl styrene, ethyl styrene, p-tert-butyl styrene, $\alpha$-methyl styrene, $\alpha$-methyl-p-methyl styrene and the like can be mentioned. Among these, styrene is preferable since the effect of improving color phase is high. These aromatic vinyl monomers can be used alone, or two or more of these can be used in combination.

The amount of the aromatic vinyl monomer unit contained in 100 mass% of the maleimide-based copolymer is preferably 40 to 60 mass%, more preferably 45 to 55 mass%. The amount is, particularly for example, 40, 45, 46, 47, 48, 49, 50, 55, or 60 mass%, and can be in the range between the two values exemplified herein. When the amount of the aromatic vinyl monomer unit is less than 40 mass%, the yellowness (YI) of the maleimide-based copolymer can get high, and when the amount exceeds 60 mass%, the heat resistance of the maleimide-based copolymer can degrade.

The vinyl cyanide monomer which can be used in the maleimide-based copolymer is used for improving the flowability and the chemical resistance of the maleimide-based copolymer. For example, acrylonitrile, methacrylonitrile, ethacrylonitrile, and fumaronitrile can be mentioned. Among these, acrylonitrile is preferable since the effect of improving chemical resistance is high. These vinyl cyanide monomers can be used alone, or two or more of these can be used in combination.

The vinyl cyanide monomer unit contained in 100 mass% of the maleimide-based copolymer is preferably 5 to 20 mass%, more preferably 7 to 15 mass%. The amount is, particularly for example, 5, 6, 7, 8, 9, 10, 11, 12, 13, 14, 15, or 20 mass%, and can be in the range between the two values exemplified herein. When the amount of the vinyl cyanide monomer unit is less than 5 mass%, the effect of improving chemical resistance of the resin composition may not be achieved, and when the amount exceeds 20 mass%, the yellowness (YI) of the maleimide-based copolymer can become high.

The maleimide monomer which can be used in the maleimide-based copolymer is used for improving the heat resistance of the maleimide-based copolymer. For example, N-alkyl maleimide such as N-methyl maleimide, N-butyl maleimide, and N-cyclohexyl maleimide; and N-phenyl maleimide, N-chlorophenyl maleimide, N-methylphenyl maleimide, N-methoxyphenyl maleimide, and N-tribromophenyl maleimide can be mentioned. Among these, N-phenyl maleimide is preferable since the effect of improving heat resistance is high. These maleimide monomers can be used alone, or two or more of these can be used in combination. In order to allow the maleimide-based copolymer contain the maleimide monomer unit, for example, maleimide monomer as the raw material can be copolymerized with other monomers. Otherwise, a copolymer obtained by copolymerizing unsaturated dicarboxylic acid monomer as the raw material with other monomer can be imidized using ammonia or primary amine.

The maleimide monomer unit contained in 100 mass% of the maleimide-based copolymer is preferably 30 to 50 mass%, more preferably 37 to 45 mass%. The amount is, particularly for example, 30, 35, 40, 41, 42, 43, 44, 45, 46, 47, 48, 49, or 50 mass%, and can be in the range between the two values exemplified herein. When the amount of the maleimide monomer unit is less than 30 mass%, the effect of improving heat resistance may not be achieved, and when the amount exceeds 50 mass%, the impact strength of the maleimide-based copolymer can degrade.

The maleimide-based copolymer can have a copolymerizable monomer copolymerized within an extent which does not impair the effect of the present invention. The copolymerizable monomer is a monomer other than the aromatic vinyl monomer, vinyl cyanide monomer, and maleimide monomer. As such monomer which can be copolymerized with the maleimide-based copolymer, unsaturated dicarboxylic anhydride monomer such as maleic anhydride, itaconic anhydride, citraconic acid anhydride, and aconitic anhydride; acrylic acid ester monomer such as methyl acrylate, ethyl acrylate and butyl acrylate; methacrylic acid ester monomer such as methyl methacrylate and ethyl methacrylate; vinyl carboxylic acid monomer such as acrylic acid and methacrylic acid; acrylamide and methacrylamide can be mentioned for example. These monomers which can be copolymerized with the maleimide-based copolymer can be used alone, or two or more of these can be used in combination.

As the monomer which can be copolymerized within the maleimide-based copolymer, unsaturated dicarboxylic anhydride monomer is preferable. When the unsaturated dicarboxylic anhydride monomer unit is contained by 0.5 mass% or more in 100 mass% of the maleimide-based copolymer, a reaction between the unsaturated dicarboxylic anhydride monomer unit and other polymer having terminal amino group or alcohol group occur, thereby achieving an effect as a compatibilizer. The content of the unsaturated dicarboxylic anhydride monomer unit is preferably 10 mass% or lower since the thermal stability becomes superior. The content of the unsaturated dicarboxylic anhydride monomer unit is further preferably 5 mass% or lower since the thermal stability becomes further superior. The content of the unsaturated dicarboxylic anhydride monomer unit is, particularly for example, 0.5, 0.6, 0.7, 0.8, 0.9, 1, 1.1, 1.2, 1.3, 1.4, 1.5, 2, 3, 4, 5, 6, 7, 8, 9, or 10 mass%, and can be in the range between the two values exemplified herein.

The yellowness (YI) of the maleimide-based copolymer is 0.5 to 3.5, preferably 2.0 to 3.0. The yellowness (YI) is, particularly for example, 0.5, 1.0, 1.5, 2.0, 2.5, 2.6, 2.7, 2.8, 2.9, 3.0, 3.1, 3.2, 3.3, 3.4, or 3.5, and can be in the range between the two values exemplified herein.

The yellowness of the maleimide-based copolymer can be adjusted for example by the weight average molecular weight of the maleimide-based copolymer. By controlling the weight average molecular weight of the maleimide-based copolymer to become lower, the yellowness can be made lower. However, when the yellowness is lower than 0.5, heat resistance of the maleimide-based copolymer degrades. By controlling the weight average molecular weight of the maleimide-based copolymer to become higher, the yellowness can be made higher. However, when the yellowness exceeds 3.5, the flowability of the maleimide-based copolymer degrades. Further, yellowness can be controlled by adjusting the amount of aromatic vinyl monomer unit and vinyl cyanide monomer unit contained in the maleimide-based copolymer, and the amount of residual maleimide monomer.

The yellowness (YI) of the maleimide-based copolymer is a value measured with the following procedures in accordance with JIS K-7373.

Maleimide-based copolymer (1 g) is dissolved in tetrahydrofuran (25 mL). After dissolving the maleimide-based copolymer, the tetrahydrofuran solution is transferred into a square cell for measurement. Color difference is measured by transmission method with D65 light source of CIE standard for a square cell containing the tetrahydrofuran solution, using a square cell containing tetrahydrofuran as a blank under the conditions of 23 °C temperature and 50% humidity. The value obtained is taken as the yellowness.

Name of Instrument: SE7700 spectrophotometer (available from Nippon Denshoku Industries Co., Ltd)
Measurement Cell: A02277A 10 x 36 x 55H square cell, two-side transmission (available from Nippon Denshoku Industries Co., Ltd)

The melt mass flow rate of the maleimide-based copolymer is preferably 25 to 90 g/10min, more preferably 65 to 80 g/10min. The melt mass flow rate is, particularly for example, 25, 30, 35, 40, 45, 50, 55, 60, 65, 66, 67, 68, 69, 70, 71, 72, 73, 74, 75, 80, 85, or 90 g/10min, and can be in the range between the two values exemplified herein. When the melt mass flow rate is below 25 g/10min, the flowability of the resin mixture can degrade, and when the melt mass flow rate exceeds 90 g/10min, the impact resistance can degrade. Melt mass flow rage is a value measured under conditions of 265 °C, 10 kg in accordance with JIS K-7210.

The amount of residual maleimide monomer contained in the maleimide-based copolymer is preferably less than 300 ppm, more preferably less than 200 ppm. When the amount of the residual maleimide monomer is 300 ppm or more, the yellowness (YI) of the maleimide-based copolymer obtained can become high.

The amount of residual maleimide monomer is a value measured under the following conditions.

Name of Instrument: gas chromatograph GC-2010 (available from SHIMADZU CORPORATION)
Column: capillary column DB-5ms (available form Agilent Technologies Japan, Ltd.)
Temperature: inlet: 280 °C, detector 280 °C
Programmed temperature gas chromatography is performed with column temperature (initial) of 80 °C.
(conditions of programmed temperature gas chromatography)

> 80 °C: held for 12 minutes
> 80 to 280 °C: temperature elevation by 20 °C/min for 10 minutes
> 280 °C: held for 10 minutes

Detector: FID
Procedure: Maleimide-based copolymer (0.5 g) is dissolved in 1,2-dichloroethane solution containing undecane as internal standard (0.014 g/L, 5 ml). Subsequently, n-hexane (5 ml) is added to the solution and the mixture is shaken using a shaker for 10 to 15 minutes, thereby allowing insoluble matter (copolymer component) to precipitate. The supernatant is taken from the mixture while the insoluble matter is precipitated and settled, and injected into gas chromatograph. Quantitative value of the residual maleimide monomer is calculated from the peak area of the maleimide monomer, using the coefficient obtained with the internal standard.

The weight average molecular weight of the maleimide-based copolymer is 50,000 to 110,000, preferably 70,000 to 100,000. The weight average molecular weight of the maleimide-based copolymer is, particularly for example, 50,000, 60,000, 70,000, 80,000, 90,000, 100,000, or 110,000, and can be in the range between the two values exemplified herein. When the weight average molecular weight is less than 50,000, the impact resistance degrades, and when the weight average molecular weight exceeds 110,000, flowability degrades.

The weight average molecular weight is a value of polystyrene equivalent measured by gel permeation chromatography (GPC), which can be measured under following conditions.

Name of Instrument: SYSTEM-21 Shodex (available from Showa Denko K.K.)
Column: PL gel MIXED-B (available from Polymer Laboratories Ltd), 3 columns connected in series
Temperature: 40°C
Detection: differential refractive index
Eluent: tetrahydrofuran
Concentration: 2 mass%
Calibration Curve: standard polystyrene (PS) (available from Polymer Laboratories Ltd) is used for preparation

As a method for controlling the weight average molecular weight of the maleimide-based copolymer, a method in which a chain transfer agent is added when the copolymer is prepared, a method in which the amount of initiator is increased, and a method in which the obtained copolymer is subject to thermal decomposition to decrease the molecular weight are known.

From the viewpoint of sufficiently improving the heat resistance of the resin such as ABS resin and ASA resin which are to be kneaded and mixed with, the mid-point glass transition temperature (Tmg) of the maleimide-based copolymer is 165 to 200 °C, preferably 170 to 200°C. The mid-point glass transition temperature is, particularly for example, 165, 166, 167, 168, 169, 170, 171, 172, 173, 174, 175, 180, 185, 190, 195, or 200 °C, and can be in the range between the two values exemplified herein. When the mid-point glass transition temperature (Tmg) is below 165 °C, the effect of providing heat resistance degrades, and when the mid-point glass transition temperature (Tmg) exceeds 200 °C, impact resistance and kneading property degrade.

The mid-point glass transition temperature (Tmg) is a value measured under the following conditions which are in accordance with JIS K-7121.

Name of Instrument: Differential Scanning Calorimeter, Robot DSC 6200 (available from Seiko Instruments Inc.)
Temperature Elevation Rate: 10 °C/min

In order to control the mid-point glass transition temperature (Tmg) of the maleimide-based copolymer, content of the maleimide monomer unit can be increased, or a monomer having high mid-point glass transition temperature (Tmg) can be copolymerized.

The polymerization method of the maleimide-based copolymer includes, for example, solution polymerization and bulk polymerization. Solution polymerization is preferable from the viewpoint that a maleimide-based copolymer with a more uniform copolymerization composition can be obtained by polymerizing while adding the monomer to be copolymerized divisionally for example. The solvent for solution polymerization is preferably non-polymerizable from the viewpoint that formation of byproduct and adverse effect can be suppressed. For example, ketone such as acetone, methyl ethyl ketone, methyl isobutyl ketone, acetophenone and the like; ether such as tetrahydrofuran, 1,4-dioxiane and the like; aromatic hydrocarbon such as benzene, toluene, xylene, chlorobenzene and the like; N,N-dimethylformamide; dimethyl sulfoxide; N-methyl-2-pyrrolidone and the like can be mentioned. In terms of easily removing solvent during devolatilization and recovery of the maleimide-based copolymer, methyl ethyl ketone and methyl isobutyl ketone are preferable. Polymerization process of any one of continuous polymerization process, batch process (batch), and semi-batch process can be applied.

The manufacturing method of the maleimide-based copolymer is not particularly limited. Here, the maleimide-based copolymer can be obtained preferably by radical polymerization, and the polymerization temperature is preferably in the range of 80 to 150 °C. Polymerization initiator is not particularly limited. For example, known azo compound such as azobisisobutyronitrile, azobiscyclohexanecarbonitrile, azobismethylpropionitrile, azobismethylbutyronitrile and the like; and known organic peroxide such as benzoyl peroxide, t-butyl peroxybenzoate, 1,1-bis(t-butyl peroxy)-3,3,5-trimethylcyclohexane, t-butyl peroxy isopropyl monocarbonate, t-butyl peroxy-2-ethylhexanoate, di-t-butyl peroxide, dicumylperoxide, ethyl-3,3-di-(t-butylperoxy)butyrate and the like can be used. These polymerization initiators can be used alone, or two or more of these can be used in combination. From the viewpoint of the polymerization reaction rate and controlling of the polymerization ratio, azo compounds and organic peroxides having a 10 hour half-life of 70 to 120 °C are preferable. The amount of the polymerization initiator is not particularly limited. Here, the amount is preferably 0.1 to 1.5 mass% with respect to 100 mass% of the total monomer unit, more preferably 0.1 to 1.0 mass%. When the amount of the polymerization initiator used is 0.1 mass% or more, it is preferable since sufficient polymerization reaction rate can be achieved. When the amount of the polymerization initiator used is less than 1.5 mass%, the polymerization reaction rate can be suppressed, thereby allowing easy control of the reaction, resulting in obtaining the target molecular weight easily.

In the manufacture of the maleimide-based copolymer, chain transfer agent can be used. The chain transfer agent used is not particularly limited. For example, n-octyl mercaptan, n-dodecyl mercaptan, t-dodecyl mercaptan, α-methyl styrene dimer, ethyl thioglycolate, limonene, terpinolene and the like can be mentioned. The amount of the chain transfer agent used is not particularly limited, so long as it is in the range which allows to obtain the target molecular weight. Here, the amount of the chain transfer agent used is preferably 0.01 to 0.8 mass% with respect to 100 mass% of the total monomer unit, more preferably 0.1 to 0.5 mass%. When the amount of the chain transfer agent used is 0.01 to 0.8 mass%, the target molecular weight can be obtained easily.

As the method for introducing maleimide monomer unit into the maleimide-based copolymer, a method in which maleimide monomer, aromatic vinyl monomer, and vinyl cyanide monomer are copolymerized (direct method) and a method in which unsaturated dicarboxylic anhydride, aromatic vinyl monomer, and vinyl cyanide monomer are copolymerized before-hand, and then further allowing the unsaturated dicarboxylic anhydride group react with ammonia or primary amine to convert the unsaturated dicarboxylic anhydride group into a maleimide monomer unit (post-imidizing method) can be mentioned. Post-imidizing method is preferable since the amount of residual maleimide monomer in the copolymer becomes less.

As the primary amine used in the post-imidizing method, for example, alkyl amine such as methylamine, ethylamine, n-propylamine, iso-propylamine, n-butylamine, n-pentylamine, n-hexylamine, n-octylamine, cyclohexylamine, and decylamine; chloro- or bromo- substituted alkyl amine; and aromatic amine such as aniline, toluidine, naphthylamine and the like can be mentioned. Among these, aniline and cyclohexylamine are preferable. These primary amines can be used alone, or two or more of these can be used in combination. The amount of the primary amine added is not particularly limited. Here, the amount of the primary amine added is preferably 0.7 to 1.1 molar equivalent with respect to the unsaturated dicarboxylic anhydride group, more preferably 0.85 to 1.05 molar equivalent. When the amount of the primary amine added is 0.7 molar equivalent or more with respect to the unsaturated dicarboxylic anhydride group contained in the maleimide-based copolymer, it is preferable since the thermal stability would be superior. When the amount of the primary amine added is 1.1 molar equivalent or less, it is preferable since the amount of the residual primary amine in the maleimide-based copolymer would be suppressed.

A catalyst can be used when the maleimide monomer unit is introduced in the post-imidizing method. The catalyst can enhance the dehydration-ring-closing reaction during the reaction between the ammonia or the primary amine with the unsaturated dicarboxylic anhydride group, especially during the reaction when the unsaturated dicarboxylic anhydride group is converted into maleimide group. There is no particular limitation regarding the type of the catalyst, and a tertiary amine can be used for example. There is no particular limitation regarding the tertiary amine. For example, trimethylamine, triethylamine, tripropylamine, tributylamine, N,N-dimethylaniline, N,N-diethylaniline and the like can be mentioned. The addition amount of the tertiary amine is not particularly limited. Here, the addition amount is preferably 0.01 molar equivalent or more with respect to the unsaturated dicarboxylic anhydride group. The temperature of the imidizing reaction of the present invention is preferably 100 to 250 °C, more preferably 120 to 200 °C. When the temperature of the imidizing reaction is 100 °C or higher, the reaction rate is sufficiently fast. Therefore, it is preferable in view of productivity. When the temperature of the imidizing reaction is 250 °C or lower, it is preferable since deterioration of the physical property due to thermal degradation of the maleimide-based copolymer can be suppressed.

When the polymerization is performed by post-imidizing method, polymerization can be carried out by charging the entire amount of the aromatic vinyl monomer, vinyl cyanide monomer, and the unsaturated dicarboxylic anhydride monomer at the initial stage of polymerization. However, since the aromatic vinyl monomer and the unsaturated dicarboxylic anhydride monomer have strong tendency for alternate copolymerization, the aromatic vinyl monomer and the unsaturated dicarboxylic anhydride monomer would be consumed at the initial stage of polymerization, and then copolymer containing large amount of vinyl cyanide monomer unit would be generated in the latter stage of polymerization. As a result, the color phase of the maleimide-based copolymer obtained would deteriorate. Further, the composition distribution of the maleimide-based copolymer obtained would be large, thereby losing compatibility with the ABS resin and the like when kneaded and mixed. This would result in undesirable physical property. Therefore, in order to obtain a maleimide-based copolymer having superior color phase and small composition distribution, it is preferable to perform the following steps.

Initial Polymerization Step: Entire amount of the vinyl cyanide monomer to be charged, 10 to 90 mass% of the aromatic vinyl monomer to be charged, and 0 to 30 mass% of the unsaturated dicarboxylic anhydride monomer to be charged are mixed, and then copolymerization is initiated by charging the mixture at the initial stage of polymerization.

Medium Polymerization Step: The residual amount of the aromatic vinyl monomer to be charged and the residual amount of the unsaturated dicarboxylic anhydride monomer to be charged are each added by portions or continuously while continuing copolymerization.

Final Polymerization Step: Aromatic vinyl monomer is added by the amount of 1/10 or more of the amount to be added by portions or continuously, after charging the entire amount of the unsaturated dicarboxylic anhydride monomer.

Imidizing Step: The aromatic vinyl - vinyl cyanide - unsaturated dicarboxylic anhydride copolymer thus obtained is imidized with ammonia or with primary amine to obtain the maleimide-based copolymer.

As the method for removing volatile component (devolatilization method) such as solvent used in the solution polymerization and unreacted monomer from the solution after the solution polymerization or from the solution after the post-imidizing of the maleimide-based copolymer, known method can be applied. For example, a vacuum devolatilization tank equipped with a heater and a devolatilization extruder equipped with a vent can be used. The molten maleimide-based copolymer after devolatilization is transferred to the pelletizing step. The molten copolymer is extruded into strands from a porous die, and processed into pellets by cold cut method, air-cooled hot cutting method or underwater hot cutting method.

A copolymer other than the maleimide-based copolymer can be further added to the maleimide-based copolymer to formulate a maleimide-based copolymer composition. Such copolymer other than the maleimide-based copolymer is a copolymer containing vinyl cyanide monomer unit and aromatic vinyl monomer unit. The maleimide-based copolymer composition thus obtained is further improved of its compatibility with the resin with which is kneaded. The amount of the copolymer added can be arbitrarily adjusted depending on the resin to be kneaded with. For example, the amount can be 0 to 20 parts by mass, preferably 0 to 10 parts by mass with respect to 100 parts by mass of the maleimide-based copolymer.

Further, in one embodiment, the amount of the copolymer added can be 0.1 parts by mass or more with respect to 100 parts by mass of the maleimide-based copolymer.

As described above, the maleimide-based copolymer composition can be obtained by adding the copolymer containing the vinyl cyanide monomer unit and the aromatic vinyl monomer unit to the maleimide-based copolymer (post-addition), and can be obtained also by allowing the copolymer generated during the copolymerization of the maleimide-based copolymer to remain therein. The maleimide-based copolymer composition can contain a copolymer which contains aromatic vinyl monomer unit, vinyl cyanide monomer unit, and maleimide monomer unit, the content of the maleimide monomer unit in the copolymer being less than 30 mass%. Further, the maleimide-based copolymer composition can contain a copolymer which consists essentially of vinyl cyanide monomer unit and aromatic vinyl monomer unit. The maleimide-based copolymer composition can be obtained by not removing such copolymer and allowing the copolymer to remain in the maleimide-based copolymer.

When the maleimide-based copolymer thus obtained is kneaded and mixed with various resins, the heat resistance of the resulting resin composition can be improved. Such various resins are not particularly limited, and acrylonitrile-butadiene-styrene copolymer resin (ABS resin), acrylonitrile-styrene-acryl based rubber copolymer resin (ASA resin), acrylonitrile-ethylene·propylene based rubber-styrene copolymer resin (AES resin), and styrene-acrylonitrile copolymer resin (SAN resin) can be mentioned. The maleimide-based copolymer and these resins have superior compatibility, and thus high heat resistance providing effect can be obtained. The formulation ratio of the maleimide-based copolymer with these resins is preferably 5 to 40 mass% of the maleimide-based copolymer and 60 to 95 mass% of one or two or more of the resin selected from the group consisting of ABS resin, ASA resin, AES resin, and SAN resin. More preferably, the formulation ratio is 10 to 30 mass% of the maleimide-based copolymer and 70 to 90 mass% of one or two or more of the resin selected from the group consisting of ABS resin, ASA resin, AES resin, and SAN resin. When the formulation ratio of the maleimide-based copolymer is in such range, the effect of improving the heat resistance of the resin composition can be achieved, and the impact resistance and the color phase of the resin composition do not deteriorate.

Further, when the maleimide-based copolymer composition is used in place of the maleimide-based copolymer, the effect of improving the heat resistance of the resin composition can also be achieved, and the impact resistance and the color phase of the resin composition do not deteriorate, similarly.

The method for kneading and mixing the maleimide-based copolymer with the various resins is not particularly limited. Here, known melting and kneading techniques can be used. As the melting and kneading machine which can be suitably used, screw extruders such as single screw extruder, fully intermeshing co-rotating twin-screw extruder, fully intermeshing counter-rotating twin-screw extruder, non-intermeshing or partially intermeshing twin-screw extruder; banbury mixer; co-kneader; mixing roll and the like can be mentioned.

When kneading and mixing the maleimide-based copolymer with these resins, stabilizer, UV absorber, flame retardant, plasticizer, lubricant, glass fiber, inorganic filler, coloring agent, antistatic agent, and the like can be further added.

Further, the maleimide-based copolymer composition can be kneaded and mixed with various resins in a similar manner as the maleimide-based copolymer, and additives can be added.

**EXAMPLE**

Hereinafter, detailed explanation is provided with reference to Examples. However, the present invention is not limited to the following Examples.

<Production Example of Maleimide-Based Copolymer (A-1)> -not according to the present invention-

To an autoclave having a capacity of about 120 liters equipped with an agitator, 20 parts by mass of styrene, 10 parts by mass of acrylonitrile, 5 parts by mass of maleic anhydride, 0.1 parts by mass of t-butylperoxy-2-ethylhexanoate, 0.5 parts by mass of $\alpha$-methyl styrene dimer, and 12 parts by mass of methyl ethyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 25 parts by mass of maleic anhydride and 0.22 parts by mass of t-butylperoxy-2-ethylhexanoate in 75 parts by mass of methyl ethyl ketone and 28 parts by mass of styrene were added continuously over 7 hours. Further, after completion of the addition of maleic anhydride, 12 parts by mass of styrene was added continuously over 2 hours. After adding styrene, the temperature of the reaction mixture was raised to 120 °C, and the reaction was carried out for 1 hour to complete polymerization. Thereafter, 18.6 parts by mass of aniline and 0.3 parts by mass of triethylamine were added to the polymerization solution, and reaction was carried out at 140 °C for 7 hours. The imidizing reaction solution after completion of reaction was fed to a vent type screw extruder, and the volatile component was removed to obtain pellet maleimide-based copolymer A-1. Results of analysis for the maleimide-based copolymer are shown in Table 1.

<Production Example of Maleimide-Based Copolymer (A-2)>

To an autoclave having a capacity of about 120 liters equipped with an agitator, 20 parts by mass of styrene, 21 parts by mass of acrylonitrile, 5 parts by mass of maleic anhydride, 0.1 parts by mass of t-butylperoxy-2-ethylhexanoate, 0.5 parts by mass of α-methyl styrene dimer, and 12 parts by mass of methyl ethyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 26 parts by mass of maleic anhydride and 0.22 parts by mass of t-butylperoxy-2-ethylhexanoate in 75 parts by mass of methyl ethyl ketone and 28 parts by mass of styrene were added continuously over 7 hours. Further, after completion of the addition of maleic anhydride, the temperature of the reaction mixture was raised to 120 °C, and the reaction was carried out for 1 hour to complete polymerization. Thereafter, 19.9 parts by mass of aniline and 0.3 parts by mass of triethylamine were added to the polymerization solution, and reaction was carried out at 140 °C for 7 hours. The imidizing reaction solution after completion of reaction was fed to a vent type screw extruder, and the volatile component was removed to obtain pellet maleimide-based copolymer A-2. Results of analysis for the maleimide-based copolymer are shown in Table 1.

<Production Example of Maleimide-Based Copolymer (A-3)>

To an autoclave having a capacity of about 120 liters equipped with an agitator, 20 parts by mass of styrene, 10 parts by mass of acrylonitrile, 5 parts by mass of maleic anhydride, 0.1 parts by mass of t-butylperoxy-2-ethylhexanoate, 0.75 parts by mass of α-methyl styrene dimer, and 12 parts by mass of methyl ethyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 25 parts by mass of maleic anhydride and 0.22 parts by mass of t-butylperoxy-2-ethylhexanoate in 75 parts by mass of methyl ethyl ketone and 28 parts by mass of styrene were added continuously over 7 hours. Further, after completion of the addition of maleic anhydride, 12 parts by mass of styrene was added continuously over 2 hours. After adding styrene, the temperature of the reaction mixture was raised to 120 °C, and the reaction was carried out for 1 hour to complete polymerization. Thereafter, 18.8 parts by mass of aniline and 0.3 parts by mass of triethylamine were added to the polymerization solution, and reaction was carried out at 140 °C for 7 hours. The imidizing reaction solution after completion of reaction was fed to a vent type screw extruder, and the volatile component was removed to obtain pellet maleimide-based copolymer A-3. Results of analysis for the maleimide-based copolymer are shown in Table 1.

<Production Example of Maleimide-Based Copolymer (A-4)> -not according to the present invention-

To an autoclave having a capacity of about 120 liters equipped with an agitator, 20 parts by mass of styrene, 10 parts by mass of acrylonitrile, 5 parts by mass of maleic anhydride, 0.1 parts by mass of t-butylperoxy-2-ethylhexanoate, 0.2 parts by mass of α-methyl styrene dimer, and 12 parts by mass of methyl ethyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 25 parts by mass of maleic anhydride and 0.22 parts by mass of t-butylperoxy-2-ethylhexanoate in 75 parts by mass of methyl ethyl ketone and 28 parts by mass of styrene were added continuously over 7 hours. Further, after completion of the addition of maleic anhydride, 12 parts by mass of styrene was added continuously over 2 hours. After adding styrene, the temperature of the reaction mixture was raised to 120 °C, and the reaction was carried out for 1 hour to complete polymerization. Thereafter, 18.7 parts by mass of aniline and 0.3 parts by mass of triethylamine were added to the polymerization solution, and reaction was carried out at 140 °C for 7 hours. The imidizing reaction solution after completion of reaction was fed to a vent type screw extruder, and the volatile component was removed to obtain pellet maleimide-based copolymer A-4. Results of analysis for the maleimide-based copolymer are shown in Table 1.

<Production Example of Maleimide-Based Copolymer (A-5)>

To an autoclave having a capacity of about 120 liters equipped with an agitator, 20 parts by mass of styrene, 10 parts by mass of acrylonitrile, 5 parts by mass of maleic anhydride, 0.1 parts by mass of t-butylperoxy-2-ethylhexanoate, 0.5 parts by mass of α-methyl styrene dimer, and 12 parts by mass of methyl ethyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 25 parts by mass of maleic anhydride and 0.22 parts by mass of t-butylperoxy-2-ethylhexanoate in 75 parts by mass of methyl ethyl ketone and 28 parts by mass of styrene were added continuously over 7 hours. Further, after completion of the addition of maleic anhydride, 12 parts by mass of styrene was added continuously over 2 hours. After adding styrene, the temperature of the reaction mixture was raised to 120 °C, and the reaction was carried out for 1 hour to complete polymerization. Thereafter, 11.9 parts by mass of aniline and 0.2 parts by mass of triethylamine were added to the polymerization solution, and reaction was carried out at 140 °C for 7 hours. The imidizing reaction solution after completion of reaction was fed to a vent type screw extruder, and the volatile component was removed to obtain pellet maleimide-based copolymer A-5. Results of analysis for the maleimide-based copolymer are shown in Table 1.

<Production Example of Maleimide-Based Copolymer (A-6)> -not according to the present invention-

To an autoclave having a capacity of about 120 liters equipped with an agitator, 20 parts by mass of styrene, 10 parts by mass of acrylonitrile, 5 parts by mass of maleic anhydride, 0.1 parts by mass of t-butylperoxy-2-ethylhexanoate, 0.5 parts by mass of α-methyl styrene dimer, and 12 parts by mass of methyl ethyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 25 parts by mass of maleic anhydride and 0.22 parts by mass of t-butylperoxy-2-ethylhexanoate in 75 parts by mass of methyl ethyl ketone and 28 parts by mass of styrene were added continuously over 7 hours. Further, after completion of the addition of maleic anhydride, 12 parts by mass of styrene was added continuously over 2 hours. After adding styrene, the temperature of the reaction mixture was raised to 120 °C, and the reaction was carried out for 1 hour to complete polymerization. Thereafter, 23.0 parts by mass of aniline and 0.3 parts by mass of triethylamine were added to the polymerization solution, and reaction was carried out at 140 °C for 7 hours. The imidizing reaction solution after completion of reaction was fed to a vent type screw extruder, and the volatile component was removed to obtain pellet maleimide-based copolymer A-6. Results of analysis for the maleimide-based copolymer are shown in Table 1.

<Production Example of Maleimide-Based Copolymer (A-7)>

To an autoclave having a capacity of about 120 liters equipped with an agitator, 20 parts by mass of styrene, 20 parts by mass of acrylonitrile, 5 parts by mass of maleic anhydride, 0.1 parts by mass of t-butylperoxy-2-ethylhexanoate, 0.5 parts by mass of α-methyl styrene dimer, and 12 parts by mass of methyl ethyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 28 parts by mass of maleic anhydride and 0.22 parts by mass of t-butylperoxy-2-ethylhexanoate in 75 parts by mass of methyl ethyl ketone and 27 parts by mass of styrene were added continuously over 7 hours. Further, after completion of the addition of maleic anhydride, the temperature of the reaction mixture was raised to 120 °C, and the reaction was carried out for 1 hour to complete polymerization. Thereafter, 25.4 parts by mass of aniline and 0.4 parts by mass of triethylamine were added to the polymerization solution, and reaction was carried out at 140 °C for 7 hours. The imidizing reaction solution after completion of reaction was fed to a vent type screw extruder, and the volatile component was removed to obtain pellet maleimide-based copolymer A-7. Results of analysis for the maleimide-based copolymer are shown in Table 1.

<Production Example of Maleimide-Based Copolymer (A-8)>

To an autoclave having a capacity of about 120 liters equipped with an agitator, 20 parts by mass of styrene, 15 parts by mass of acrylonitrile, 5 parts by mass of maleic anhydride, 0.1 parts by mass of t-butylperoxy-2-ethylhexanoate, 0.5 parts by mass of α-methyl styrene dimer, and 12 parts by mass of methyl ethyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 28 parts by mass of maleic anhydride and 0.22 parts by mass of t-butylperoxy-2-ethylhexanoate in 75 parts by mass of methyl ethyl ketone and 28 parts by mass of styrene were added continuously over 7 hours. Further, after completion of the addition of maleic anhydride, 4 parts by mass of styrene was added continuously over 2 hours. After adding styrene, the temperature of the reaction mixture was raised to 120 °C, and the reaction was carried out for 1 hour to complete polymerization. Thereafter, 20.1 parts by mass of aniline and 0.3 parts by mass of triethylamine were added to the polymerization solution, and reaction was carried out at 140 °C for 7 hours. The imidizing reaction solution after completion of reaction was fed to a vent type screw extruder, and the volatile component was removed to obtain pellet maleimide-based copolymer A-8. Results of analysis for the maleimide-based copolymer are shown in Table 1.

<Production Example of Maleimide-Based Copolymer (B-1)>

To an autoclave having a capacity of about 120 liters equipped with an agitator, 20 parts by mass of styrene, 10 parts by mass of acrylonitrile, 5 parts by mass of maleic anhydride, 0.1 parts by mass of t-butylperoxy-2-ethylhexanoate, 0.025 parts by mass of α-methyl styrene dimer, and 12 parts by mass of methyl ethyl ketone were charged. After replacing the gaseous phase of the system with nitrogen gas, the temperature was raised to 92 °C over 40 minutes with agitation.

After raising the temperature, the temperature was kept at 92 °C, and a solution prepared by dissolving 25 parts by mass of maleic anhydride and 0.22 parts by mass of t-butylperoxy-2-ethylhexanoate in 75 parts by mass of methyl ethyl ketone and 28 parts by mass of styrene were added continuously over 7 hours. Further, after completion of the addition of maleic anhydride, 12 parts by mass of styrene was added continuously over 2 hours. After adding styrene, the temperature of the reaction mixture was raised to 120 °C, and the reaction was carried out for 1 hour to complete polymerization. Thereafter, 18.6 parts by mass of aniline and 0.3 parts by mass of triethylamine were added to the polymerization solution, and reaction was carried out at 140 °C for 7 hours. The imidizing reaction solution after completion of reaction was fed to a vent type screw extruder, and the volatile component was removed to obtain pellet maleimide-based copolymer B-1. Results of analysis for the maleimide-based copolymer are shown in Table 2.

<Production Example of Maleimide-Based Copolymer (B-2)>

To an autoclave having a capacity of about 120 liters equipped with an agitator, 20 parts by mass of styrene, 10 parts by mass of acrylonitrile, 6 parts by mass of maleic anhydride, 0.1 parts by mass of t-butylperoxy-2-ethylhexanoate, and 12 parts by mass of methyl ethyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 24 parts by mass of maleic anhydride and 0.22 parts by mass of t-butylperoxy-2-ethylhexanoate in 75 parts by mass of methyl ethyl ketone and 28 parts by mass of styrene were added continuously over 7 hours. Further, after completion of the addition of maleic anhydride, 12 parts by mass of styrene was added continuously over 2 hours. After adding styrene, the temperature of the reaction mixture was raised to 120 °C, and the reaction was carried out for 1 hour to complete polymerization. Thereafter, 18.9 parts by mass of aniline and 0.3 parts by mass of triethylamine were added to the polymerization solution, and reaction was carried out at 140 °C for 7 hours. The imidizing reaction solution after completion of reaction was fed to a vent type screw extruder, and the volatile component was removed to obtain pellet maleimide-based copolymer B-2. Results of analysis for the maleimide-based copolymer are shown in Table 2.

<Production Example of Maleimide-Based Copolymer (B-3)>

To an autoclave having a capacity of about 120 liters equipped with an agitator, 20 parts by mass of styrene, 10 parts by mass of acrylonitrile, 7 parts by mass of maleic anhydride, 0.1 parts by mass of t-butylperoxy-2-ethylhexanoate, 0.1 parts by mass of $\alpha$-methyl styrene dimer, and 12 parts by mass of methyl ethyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 23 parts by mass of maleic anhydride and 0.22 parts by mass of t-butylperoxy-2-ethylhexanoate in 75 parts by mass of methyl ethyl ketone and 28 parts by mass of styrene were added continuously over 7 hours. Further, after completion of the addition of maleic anhydride, 12 parts by mass of styrene was added continuously over 2 hours. After adding styrene, the temperature of the reaction mixture was raised to 120 °C, and the reaction was carried out for 1 hour to complete polymerization. Thereafter, 18.6 parts by mass of aniline and 0.3 parts by mass of triethylamine were added to the polymerization solution, and reaction was carried out at 140 °C for 7 hours. The imidizing reaction solution after completion of reaction was fed to a vent type screw extruder, and the volatile component was removed to obtain pellet maleimide-based copolymer B-3. Results of analysis for the maleimide-based copolymer are shown in Table 2.

<Production Example of Maleimide-Based Copolymer (B-4)>

To an autoclave having a capacity of about 120 liters equipped with an agitator, 20 parts by mass of styrene, 21 parts by mass of acrylonitrile, 8 parts by mass of maleic anhydride, 0.1 parts by mass of t-butylperoxy-2-ethylhexanoate, 0.025 parts by mass of $\alpha$-methyl styrene dimer, and 12 parts by mass of methyl ethyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 23 parts by mass of maleic anhydride and 0.22 parts by mass of t-butylperoxy-2-ethylhexanoate in 75 parts by mass of methyl ethyl ketone and 28 parts by mass of styrene were added continuously over 7 hours. Further, after completion of the addition of maleic anhydride, the temperature of the reaction mixture was raised to 120 °C, and the reaction was carried out for 1 hour to complete polymerization. Thereafter, 19.2 parts by mass of aniline and 0.3 parts by mass of triethylamine were added to the polymerization solution, and reaction was carried out at 140 °C for 7 hours. The imidizing reaction solution after completion of reaction was fed to a vent type screw extruder, and the volatile component was removed to obtain pellet maleimide-based copolymer B-4. Results of analysis for the maleimide-based copolymer are shown in Table 2.

<Production Example of Maleimide-Based Copolymer (B-5)>

To an autoclave having a capacity of about 120 liters equipped with an agitator, 20 parts by mass of styrene, 10 parts by mass of acrylonitrile, 9 parts by mass of maleic anhydride, 0.1 parts by mass of t-butylperoxy-2-ethylhexanoate, 0.025 parts by mass of $\alpha$-methyl styrene dimer, and 12 parts by mass of methyl ethyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 21 parts by mass of maleic anhydride and 0.22 parts by mass of t-butylperoxy-2-ethylhexanoate in 75 parts by mass of methyl ethyl ketone and 28 parts by mass of styrene were added continuously over 7 hours. Further, after completion of the addition of maleic anhydride, 12 parts by mass of styrene was added continuously over 2 hours. After adding styrene, the temperature of the reaction mixture was raised to 120 °C, and the reaction was carried out for 1 hour to complete polymerization. Thereafter, 18.7 parts by mass of aniline and 0.3 parts by mass of triethylamine were added to the polymerization solution, and reaction was carried out at 140 °C for 7 hours. The imidizing reaction solution after completion of reaction was fed to a vent type screw extruder, and the volatile component was removed to obtain pellet maleimide-based copolymer B-5. Results of analysis for the maleimide-based copolymer are shown in Table 2.

<Production Example of Maleimide-Based Copolymer (B-6)>

To an autoclave having a capacity of about 120 liters equipped with an agitator, 20 parts by mass of styrene, 10 parts by mass of acrylonitrile, 10 parts by mass of maleic anhydride, 0.1 parts by mass of t-butylperoxy-2-ethylhexanoate, 0.025 parts by mass of $\alpha$-methyl styrene dimer, and 12 parts by mass of methyl ethyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 20 parts by mass of maleic anhydride and 0.22 parts by mass of t-butylperoxy-2-ethylhexanoate in 75 parts by mass of methyl ethyl ketone and 28 parts by mass of styrene were added continuously over 7 hours. Further, after completion of the addition of maleic anhydride, 12 parts by mass of styrene was added continuously over 2 hours. After adding styrene, the temperature of the reaction mixture was raised to 120 °C, and the reaction was carried out for 1 hour to complete polymerization. Thereafter, 18.7 parts by mass of aniline and 0.3 parts by mass of triethylamine were added to the polymerization solution, and reaction was carried out at 140 °C for 7 hours. The imidizing reaction solution after completion of reaction was fed to a vent type screw extruder, and the volatile component was removed to obtain pellet maleimide-based copolymer B-6. Results of analysis for the maleimide-based copolymer are shown in Table 2.

<Production Example of Maleimide-Based Copolymer (B-7)>

To an autoclave having a capacity of about 120 liters equipped with an agitator, 20 parts by mass of styrene, 22 parts by mass of acrylonitrile, 13 parts by mass of maleic anhydride, 0.1 parts by mass of t-butylperoxy-2-ethylhexanoate, 0.5 parts by mass of $\alpha$-methyl styrene dimer, and 12 parts by mass of methyl ethyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 18 parts by mass of maleic anhydride and 0.22 parts by mass of t-butylperoxy-2-ethylhexanoate in 75 parts by mass of methyl ethyl ketone and 27 parts by mass of styrene were added continuously over 7 hours. Further, after completion of the addition of maleic anhydride, the temperature of the reaction mixture was raised to 120 °C, and the reaction was carried out for 1 hour to complete polymerization. Thereafter, 19.2 parts by mass of aniline and 0.3 parts by mass of triethylamine were added to the polymerization solution, and reaction was carried out at 140 °C for 7 hours. The imidizing reaction solution after completion of reaction was fed to a vent type screw extruder, and the volatile component was removed to obtain pellet maleimide-based copolymer B-7. Results of analysis for the maleimide-based copolymer are shown in Table 2.

[Table 1]

| Table 1 | | | A-1 | A-2 | A-3 | A-4 | A-5 | A-6 | A-7 | A-8 |
|---|---|---|---|---|---|---|---|---|---|---|
| constitution unit | aromatic vinyl monomer unit | mass% | 49.1 | 39.4 | 48.5 | 49.0 | 48.8 | 48.8 | 38.3 | 41.5 |
| | vinyl cyanide monomer unit | mass% | 8.0 | 14.8 | 8.2 | 7.8 | 8.1 | 8.1 | 14.2 | 12.0 |
| | unsaturated dicarboxylic anhydride monomer unit | mass% | 1.1 | 1.2 | 1.1 | 1.1 | 16.3 | 0.0 | 0.0 | 1.3 |
| | maleimide-based monomer unit | mass% | 41.8 | 44.7 | 42.2 | 42.1 | 26.8 | 43.1 | 47.5 | 45.3 |
| molecular weight (x10$^4$) | | Mw | 7.9 | 9.6 | 6.0 | 10.9 | 7.8 | 8.1 | 8.5 | 8.7 |
| MFR (265°C, 98N) | | g/10min | 72 | 81 | 63 | 38 | 75 | 68 | 83 | 34 |
| mid-point glass transition temperature | | °C | 170 | 167 | 165 | 172 | 168 | 172 | 166 | 169 |
| amount of residual maleimide monomer | | ppm | 200 | 220 | 200 | 200 | 1720 | 90 | 100 | 220 |
| YI | | - | 2.0 | 3.3 | 0.8 | 3.4 | 2.0 | 2.0 | 3.2 | 2.8 |

[Table 2]

| Table 2 | | | B-1 | B-2 | B-3 | B-4 | B-5 | B-6 | B-7 |
|---|---|---|---|---|---|---|---|---|---|
| constitution unit | aromatic vinyl monomer unit | mass% | 49.1 | 48.4 | 48.8 | 38.9 | 48.8 | 48.8 | 38.1 |
| | vinyl cyanide monomer unit | mass% | 8.0 | 8.0 | 8.2 | 16.8 | 8.1 | 8.1 | 17.6 |
| | unsaturated dicarboxylic anhydride monomer unit | mass% | 1.1 | 1.1 | 1.2 | 1.1 | 1.1 | 1.1 | 1.1 |
| | maleimide-based monomer unit | mass% | 41.8 | 42.5 | 41.9 | 43.2 | 41.9 | 42.0 | 43.2 |
| molecular weight (x10$^4$) | | Mw | 13.7 | 15.7 | 12.6 | 13.0 | 14.0 | 14.7 | 4.6 |
| MFR (265°C, 98N) | | g/10min | 15 | 18 | 17 | 19 | 22 | 11 | 71 |
| mid-point glass transition temperature | | °C | 170 | 170 | 164 | 170 | 166 | 172 | 170 |
| amount of residual maleimide monomer | | ppm | 200 | 200 | 200 | 200 | 200 | 200 | 200 |
| YI | | - | 4.4 | 4.5 | 4.1 | 8.1 | 4.4 | 4.4 | 2.0 |

(weight average molecular weight)

The weight average molecular weight is a value of polystyrene equivalent measured by gel permeation chromatography (GPC), which was measured under following conditions.

Name of Instrument: SYSTEM-21 Shodex (available from Showa Denko K.K.)
Column: PL gel MIXED-B (available from Polymer Laboratories Ltd), 3 columns connected in series
Temperature: 40 °C
Detection: differential refractive index
Eluent: tetrahydrofuran
Concentration: 2 mass%
Calibration Curve: standard polystyrene (PS) (available from Polymer Laboratories Ltd) was used for preparation

(melt mass flow rate)

Melt mass flow rage was measured in accordance with JIS K-7210, using the following instrument under the following measurement conditions.

Name of Instrument: No. 120 Melt-Flow Rate Tester (available from YASUDA SEIKI SEISAKUSHO, LTD.)
Temperature: 265 °C
Load: 98 N

(mid-point glass transition temperature (Tmg))

Mid-point glass transition temperature was measured in accordance with JIS-K-7121, using the following instrument under the following measurement conditions.

Name of Instrument: Robot DSC 6200 (available from Seiko Instruments Inc.)
Temperature Elevation Rate: 10 °C/min

(amount of residual maleimide monomer)

Each of the maleimide-based copolymer obtained as above (0.5 g) was dissolved in 1,2-dichloroethane solution containing undecane as internal standard (0.014 g/L, 5 ml). Subsequently, n-hexane (5 ml) was added to the solution and the mixture was shaken using a shaker for 10 to 15 minutes, thereby allowing insoluble matter (copolymer component) to precipitate. The supernatant was taken from the mixture while the insoluble matter was precipitated and settled, and injected into gas chromatograph. Quantitative value of the residual maleimide monomer was calculated from the peak area of the maleimide monomer, using the coefficient obtained with the internal standard.

Name of Instrument: gas chromatograph GC-2010 (available from SHIMADZU CORPORATION)
Column: capillary column DB-5ms (available form Agilent Technologies Japan, Ltd.)
Temperature: inlet: 280 °C, detector 280 °C
Programmed temperature gas chromatography was performed with column temperature (initial) of 80 °C.
(conditions of programmed temperature gas chromatography)

80 °C: held for 12 minutes
80 to 280 °C: temperature elevation by 20 °C/min for 10 minutes
280 °C: held for 10 minutes

Detector: FID

(yellowness (YI))

Yellowness was measured in accordance with JIS K-7373. Specific procedures were as follows.
Each of the maleimide-based copolymer obtained as above (1 g) was dissolved in tetrahydrofuran (25 mL). After dissolving the maleimide-based copolymer, the solution was transferred into a square cell for measurement. Color difference was measured by transmission method with D65 light source of CIE standard using a square cell containing tetrahydrofuran as a blank under the conditions of 23 °C temperature and 50% humidity. The value obtained was taken as the yellowness.

Name of Instrument: SE7700 spectrophotometer (available from Nippon Denshoku Industries Co., Ltd)
Square Cell: A02277A 10 x 36 x 55H square cell, two-side transmission

<Examples, Comparative Examples>

Examples 1 to 8 (Examples 1, 4 and 6 are not according to the present invention), Comparative Examples 1 to 7 (kneading and mixing of maleimide-based copolymer and ABS resin)
Maleimide-based copolymers of A-1 to A-8 and commercially available ABS resin "GR-3000" (available from Denka Company Limited) were blended by a ratio shown in Table 3 and Table 4. Subsequently, extrusion was performed using a twin-screw extruder (TEM-35B, available from TOSHIBA MACHINE CO., LTD, currently SHIBAURA MACHINE CO., LTD.) to obtain pellets. These pellets were used to prepare test specimens using an injection molding machine.

Various physical properties of the test specimens were measured. Results are shown in Table 3 and Table 4.

[Table 3]

| Table 3 | | | | Example1 | Example2 | Example3 | Example4 | Example5 | Example6 | Example7 | Example8 |
|---|---|---|---|---|---|---|---|---|---|---|---|
| maleimide-based copolymer used | | - | | A-1 | A-2 | A-3 | A-4 | A-5 | A-6 | A-7 | A-8 |
| | formulation amount | GR-3000 | mass% | 80 | 80 | 80 | 80 | 80 | 80 | 80 | 80 |
| | | maleimide-based copolymer | mass% | 20 | 20 | 20 | 20 | 20 | 20 | 20 | 20 |
| physical property evaluation result | Charpy impact strength (with notch) | kJ/m² | | 10.5 | 10.4 | 10.0 | 11.1 | 11.7 | 10.6 | 10.5 | 10.1 |
| | Vicat softening temperature (50N) | °C | | 112 | 112 | 112 | 113 | 112 | 113 | 112 | 112 |
| | MFR (220°C. 98N) | g/10min | | 12 | 13 | 12 | 11 | 13 | 12 | 10 | 11 |
| | YI | | | 40.1 | 48.2 | 32.5 | 48.9 | 40.2 | 40.2 | 47.5 | 44.8 |
| | chemical resistance | | | B | A | B | B | B | B | A | A |

[Table 4]

| Table 4 | | | | Comparative Example1 | Comparative Example2 | Comparative Example3 | Comparative Example4 | Comparative Example5 | Comparative Example6 | Comparative Example7 |
|---|---|---|---|---|---|---|---|---|---|---|
| maleimide-based copolymer used | | | - | B-1 | B-2 | B-3 | B-4 | B-5 | B-6 | B-7 |
| physical property evaluation result | formulation amount | GR-3000 | mass% | 80 | 80 | 80 | 80 | 80 | 80 | 80 |
| | | maleimide-based copolymer | mass% | 20 | 20 | 20 | 20 | 20 | 20 | 20 |
| | Charpy impact strength (with notch) | kJ/m$^2$ | | 11.7 | 13.3 | 14.4 | 16.7 | 18.1 | 19.9 | 3.1 |
| | Vicat softening temperature (50N) | °C | | 112 | 113 | 112 | 113 | 113 | 114 | 113 |
| | MFR (220°C, 98N) | g/10min | | 9 | 9 | 9 | 9 | 9 | 7 | 11 |
| | YI | | | 54.7 | 55.4 | 52.9 | 77.7 | 55.0 | 54.8 | 40.1 |
| | chemical resistance | | | B | B | B | A | B | B | C |

(Charpy impact strength)

The Charpy impact strength was measured using a notched specimen in accordance with JIS K-7111. Edgewise was adopted as the striking direction, relative humidity was 50%, and atmospheric temperature was 23 °C. Here, digital impact tester available from Toyo Seiki Seisaku-sho, Ltd. was used as the measuring instrument.

(Vicat softening temperature)

The Vicat softening temperature was measured in accordance with JIS K-7206. Here, Method 50 (load: 50N, temperature elevation rate: 50 °C/hour) was used, and the test specimen having the size of 10 mm x 10 mm and 4 mm thickness was used. HDT & VSPT testing device available from Toyo Seiki Seisaku-sho, Ltd. was used as the measuring instrument.

(melt mass flow rate)

Melt mass flow rate was measured in accordance with JIS K-7210, under the conditions of 220 °C and 98 N load.

Yellowness (YI)

Yellowness was measured in accordance with JIS K-7373. Specific procedures were as follows.
Each of the test specimens obtained as above (1 g) was dissolved in tetrahydrofuran (25 mL). After dissolving the specimen, the solution was transferred into a square cell for measurement. Color difference was measured by transmission method with D65 light source of CIE standard using a square cell containing tetrahydrofuran as a blank under the conditions of 23 °C temperature and 50% humidity. The value obtained was taken as the yellowness.

Name of Instrument: SE7700 spectrophotometer (available from Nippon Denshoku Industries Co., Ltd)
Square Cell: A02277A 10 x 36 x 55H square cell, two-side transmission

(chemical resistance)

Cracks of a test specimen having a shape of 316 x 20 x 2 mm were observed after 48 hours at 23 °C by a quarter ellipse method having a major radius of 250 mm and a minor radius of 150 mm. In order to eliminate influence of molding strain, the test specimen was produced by pressing and cutting out a pellet at 260 °C. Toluene was used as the chemical.
Critical strain was obtained by the following equation.

$$\varepsilon = b/2a^2 \, [1 - (a^2 - b^2)X^2/a^4]^{1.5} \times t \times 100$$

Critical strain: $\varepsilon$, major radius: a, minor radius: b, thickness of test specimen: t, crack initiation point: X
The chemical resistance was evaluated from the critical strain according to the following criteria.
A: 0.8 or more, B: 0.6 to 0.7, C: 0.3 to 0.5, D: 0.2 or less
As can be understood from Example 1 to Example 8, the maleimide-based copolymers A-2, A-3, A-5, A-7 and A-8 of the present inventions were able to achieve high mid-point glass transition temperature (Tmg) and high melt mass flow rate by decreasing the molecular weight without decreasing the content of the maleimide monomer unit in the composition. However, when the molecular weight was decreased to below a certain value, deterioration in chemical resistance was observed as in Comparative Example 7. The maleimide-based copolymers of B-1 to B-7, which do not satisfy the requirement of the present invention are out of the range of the Claims of the present invention. The resin compositions of Comparative Example 1 to Comparative Example 7 obtained by kneading and mixing such maleimide-based copolymer and ABS resin were inferior in at least impact resistance, flowability, or chemical resistance.
The maleimide-based copolymer of the present invention can provide a resin composition having superior balance in chemical resistance, heat resistance, impact resistance, and flowability, by kneading and mixing the maleimide-based copolymer with ABS resin, ASA resin, AES resin, or SAN resin which are compatible with the maleimide-based copolymer. The maleimide-based copolymer can also improve the flowability of mixed resin. Therefore, speed of molding can be enhanced, and production speed can be improved. Further, the maleimide-based copolymer can suppress yellowness (YI) of the molded article, and thus the molded article can be used for white products.

**Claims**

1. A maleimide-based copolymer, comprising: aromatic vinyl monomer unit, vinyl cyanide monomer unit, and maleimide monomer unit; wherein:

   the maleimide-based copolymer has a weight average molecular weight of 50,000 to 110,000, which is a value of polystyrene equivalent measured by gel permeation chromatography (GPC) as described in the specification;
   the maleimide-based copolymer has a mid-point glass transition temperature measured in accordance with JIS K-7121 of 165 °C to 200 °C and
   the maleimide-based copolymer has a yellowness measured in accordance with JIS K-7373 of 0.5 to 3.5.

2. The maleimide-based copolymer of Claim 1, wherein the maleimide-based copolymer comprises 40 to 60 mass% of the aromatic vinyl monomer unit, 5 to 20 mass% of the vinyl cyanide monomer unit, and 30 to 50 mass% of the maleimide monomer unit as a monomer unit constituting the maleimide-based copolymer.

3. A maleimide-based copolymer composition, comprising:

   100 parts by mass of the maleimide-based copolymer of any one of Claim 1 or 2; and
   0 to 20 parts by mass of a copolymer other than the maleimide-based copolymer; wherein:
   the copolymer other than the maleimide-based copolymer comprises vinyl cyanide monomer unit and aromatic vinyl monomer unit.

4. A resin composition, comprising:

   5 to 40 mass% of the maleimide-based copolymer of any one of Claim 1 or 2; and
   60 to 95 mass% of one or two or more of a resin selected from the group consisting of: acrylonitrile-butadiene-styrene copolymer resin, acrylonitrile-styrene-acryl based rubber copolymer resin, acrylonitrile-ethylene·propylene based rubber-styrene copolymer resin, and styrene-acrylonitrile copolymer resin.

5. A resin composition, comprising:

   5 to 40 mass% of the maleimide-based copolymer composition of Claim 3; and
   60 to 95 mass% of one or two or more of a resin selected from the group consisting of: acrylonitrile-butadiene-styrene copolymer resin, acrylonitrile-styrene-acryl based rubber copolymer resin, acrylonitrile-ethylene·propylene based rubber-styrene copolymer resin, and styrene-acrylonitrile copolymer resin.

6. An injection molded body made from the resin composition of Claim 4 or Claim 5.

7. The injection molded body of Claim 6 used as an interior component or an exterior component of an automobile.

**Patentansprüche**

1. Copolymer auf Maleimidbasis, umfassend: eine aromatische Vinylmonomereinheit, eine Vinylcyanidmonomereinheit und eine Maleimidmonomereinheit, wobei:

   das Copolymer auf Maleimidbasis ein gewichtsmittleres Molekulargewicht von 50.000 bis 110.000 aufweist, wobei es sich um einen durch Gel-Permeations-Chromatographie (GPC) gemessenen Polystyroläquivalentwert handelt, wie in der Beschreibung beschrieben;
   das Copolymer auf Maleimidbasis eine gemäß JIS K-7121 gemessene mittlere Glasübergangstemperatur von 165 °C bis 200 °C aufweist und
   das Copolymer auf Maleimidbasis einen gemäß JIS K-7373 gemessenen Gelbgrad von 0,5 bis 3,5 aufweist.

2. Copolymer auf Maleimidbasis nach Anspruch 1, wobei das Copolymer auf Maleimidbasis 40 bis 60 Masse-% der aromatischen Vinylmonomereinheit, 5 bis 20 Masse-% der Vinylcyanidmonomereinheit und 30 bis 50 Masse-% der Maleimidmonomereinheit als Monomereinheit umfasst, die das Copolymer auf Maleimidbasis bildet.

3. Copolymerzusammensetzung auf Maleimidbasis, umfassend:

100 Masseteile des Copolymers auf Maleimidbasis nach einem der Ansprüche 1 oder 2; und
0 bis 20 Masseteile eines anderen Copolymers als des Copolymers auf Maleimidbasis, wobei:
das andere Copolymer als das Copolymer auf Maleimidbasis eine Vinylcyanidmonomereinheit und eine aromatische Vinylmonomereinheit umfasst.

**4.** Harzzusammensetzung, umfassend:

5 bis 40 Masse-% des Copolymers auf Maleimidbasis nach einem der Ansprüche 1 oder 2; und
60 bis 95 Masse-% eines oder zweier oder mehrerer eines Harzes, das ausgewählt aus der Gruppe bestehend aus: Acrylnitril-Butadien-Styrol-Copolymerharz, Kautschuk-Copolymerharz auf Acrylnitril-Styrol-Acryl-Basis, Kautschuk-Styrol-Copolymerharz auf Acrylnitril-Ethylenpropylen-Basis und Styrol-Acrylnitril-Copolymerharz.

**5.** Harzzusammensetzung, umfassend:

5 bis 40 Masse-% der Copolymerzusammensetzung auf Maleimidbasis nach Anspruch 3; und
60 bis 95 Masse-% eines oder zweier oder mehrerer eines Harzes, das ausgewählt aus der Gruppe bestehend aus: Acrylnitril-Butadien-Styrol-Copolymerharz, Kautschuk-Copolymerharz auf Acrylnitril-Styrol-Acryl-Basis, Kautschuk-Styrol-Copolymerharz auf Acrylnitril-Ethylenpropylen-Basis und Styrol-Acrylnitril-Copolymerharz.

**6.** Spritzgusskörper aus der Harzzusammensetzung nach Anspruch 4 oder Anspruch 5.

**7.** Spritzgusskörper nach Anspruch 6, der als Innenkomponente oder Außenkomponente eines Kraftfahrzeugs verwendet wird.

**Revendications**

**1.** Copolymère à base de maléimide, comprenant : une unité monomère de vinyle aromatique, une unité monomère de cyanure de vinyle, et une unité monomère de maléimide ; dans lequel :

le copolymère à base de maléimide a un poids moléculaire moyen en poids de 50 000 à 110 000, qui est une valeur d'équivalent polystyrène mesurée par chromatographie par perméation de gel (CPG) telle que décrite dans la spécification;
le copolymère à base de maléimide a une température de transition vitreuse à point moyen mesurée conformément à JIS K-7121 de 165 °C à 200 °C et
le copolymère à base de maléimide a un jaunissement mesuré conformément à JIS K-7373 de 0,5 à 3,5.

**2.** Copolymère à base de maléimide de la revendication 1, dans lequel le copolymère à base de maléimide comprend 40 à 60 % en masse de l'unité monomère de vinyle aromatique, 5 à 20 % en masse de l'unité monomère de cyanure de vinyle, et 30 à 50 % en masse de l'unité monomère de maléimide en tant qu'unité monomère constituant le copolymère à base de maléimide.

**3.** Composition de copolymère à base de maléimide comprenant :

100 parties en masse du copolymère à base de maléimide de l'une quelconque des revendications 1 ou 2 ; et
0 à 20 parties en masse d'un copolymère autre que le copolymère à base de maléimide ; dans lequel :
le copolymère autre que le copolymère à base de maléimide comprend une unité monomère de cyanure de vinyle et une unité monomère de vinyle aromatique.

**4.** Composition de résine comprenant :

5 à 40 % en masse du copolymère à base de maléimide de l'une quelconque des revendications 1 ou 2 ; et
60 à 95 % en masse d'une ou deux ou plus d'une résine choisie dans le groupe constitué par : la résine de copolymère acrylonitrile-butadiène-styrène, la résine de copolymère caoutchouc à base d'acrylonitrile-styrène-acryle, la résine de copolymère caoutchouc-styrène à base d'acrylonitrile-éthylène-propylène et la résine de copolymère styrène-acrylonitrile.

**5.** Composition de résine comprenant :

5 à 40 % en masse de la composition de copolymère à base de maléimide de la revendication 3 ; et
60 à 95 % en masse d'une ou deux ou plus d'une résine choisie dans le groupe constitué par : la résine de copolymère acrylonitrile-butadiène-styrène, la résine de copolymère caoutchouc à base d'acrylonitrile-styrène-acryle, la résine de copolymère caoutchouc-styrène à base d'acrylonitrile-éthylène-propylène et la résine de copolymère styrène-acrylonitrile.

6. Corps moulé par injection fabriqué à partir de la composition de résine de la revendication 4 ou de la revendication 5.

7. Corps moulé par injection de la revendication 6 utilisé comme composant intérieur ou extérieur d'une automobile.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 57098536 A
- JP 57125242 A
- JP 2004339280 A
- JP 2007009228 A
- EP 3998148 A1
- EP 3998149 A1
- WO 2008153243 A1